# FASCICULE DE BREVET EUROPEEN

(11) **EP 0 713 760 B1**
(45) Date de publication et mention de la délivrance du brevet: **28.10.1998**
(21) Numéro de dépôt: 95402645.6
(22) Date de dépôt: 23.11.1995
(51) Int. Cl.: B29C 65/44, F21M 7/00

(54) **Procédé de fabrication d'un socle de feu de signalisation pour véhicule et feu de signalisation fabriqué par ce procédé**
Verfahren zur Herstellung einer Fasssung für KFZ-Signalleuchten und nach diesem Verfahren hergestellte Signalleuchte
Method of manufacturing a socket for a vehicle signal light and signal light made by this method

(30) Priorité: 23.11.1994 FR 9414022
(43) Date de publication de la demande: 29.05.1996
(73) Titulaire: VALEO VISION, 93000 Bobigny (FR)
(72) Inventeur: Caron, Philippe, F-27950 St. Marcel (FR); Rives, Claude, F-27930 Aviron (FR)
(74) Mandataire: Le Forestier, Eric

(56) Documents cités:
- DE-A- 2 939 279
- DE-A- 3 742 719
- FR-A- 2 535 437
- FR-A- 2 536 743
- FR-A- 2 704 934
- GB-A- 2 025 597
- GB-A- 2 127 730
- US-A- 4 356 926
- PATENT ABSTRACTS OF JAPAN vol. 8 no. 174 (M-316) ,10 Août 1984 & JP-A-59 067011 (TENSHIYOU DENKI K. K. K.) 16 Avril 1984,

## Description

La présente invention concerne d'une façon générale les feux de signalisation de véhicules automobiles, et plus particulièrement un nouveau procédé de fabrication d'un socle de feu de signalisation incorporant un ou plusieurs écrans thermiques, ainsi qu'un nouveau feu de signalisation incorporant un ou plusieurs écrans thermiques.

Dans l'état de la technique connue, un bloc de feux de signalisation comprend généralement un socle associé à un porte-lampe pour une pluralité de lampes destinées aux diverses fonctions de signalisation à engendrer. Le socle comporte entre les différents feux des cloisons destinées à individualiser lesdits feux.

Il est connu de remplacer certaines de ces cloisons par des écrans thermiques métalliques, ou de doubler les cloisons avec de tels écrans. De tels écrans sont rendus nécessaires lorsque la chaleur dégagée par les lampes en fonctionnement risque de provoquer un ramolissement et une déformation de ces cloisons.

Ce risque existe lorsqu'au moins une lampe est située à proximité d'une cloison, ou bien lorsque la cavité dans laquelle se trouve la lampe est trop peu aérée pour permettre une bonne évacuation par convection naturelle de la chaleur dégagée par la ou les lampes (notamment dans le cas des feux étanches).

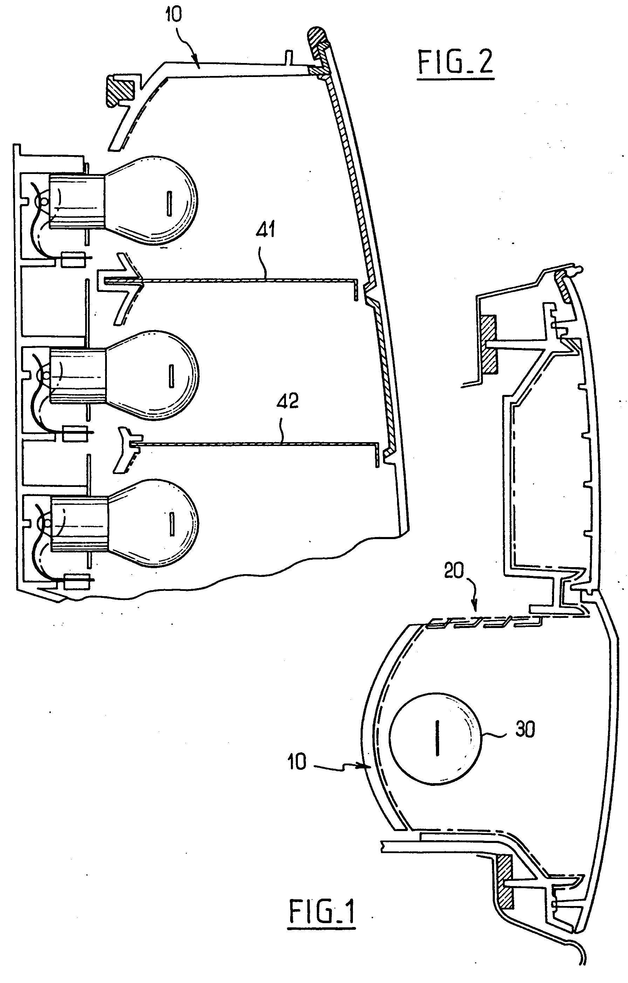

La figure 1 illustre par une coupe verticale axiale un premier exemple d'un écran thermique de la technique connue. Une cloison métallique ajourée 20 remplace la paroi supérieure du socle 10 au niveau de la fonction lumineuse considérée, mettant en jeu la lampe 30. Cette cloison est fixée sur le socle 10 en étant introduite à force entre deux glissières venues de moulage lors de la fabrication du socle. Des ergots en saillie à partir de la cloison permettent de bloquer celle-ci dans les glissières.

La figure 2 illustre par une coupe verticale axiale un autre type d'écran thermique connu. Ainsi il est prévu une pluralité d'écrans métalliques pleins 41, 42 qui forment en même temps des cloisons horizontales de séparation optique des fonctions lumineuses voisines. Ces cloisons sont fixées sur le socle 10 de la même manière que la cloison ajourée de la figure 1, en étant emmanchées dans des glissières issues du socle et bloquées par des ergots en saillie à partir des cloisons.

Ces solutions connues souffrent cependant d'un certain nombre d'inconvénients. Tout d'abord, elles nécessitent pour la mise en place du ou des écrans thermiques des opérations manuelles de pose, qui allongent les opérations de montage du bloc de feux et le rendent donc plus coûteux.

En outre, le montage des cloisons implique des coopérations de formes délicates à maîtriser. En particulier, tout jeu dans la fabrication du socle ou des écrans risque de conduire à une difficulté excessive de mise en place des écrans, ou au contraire à une retenue défectueuse des écrans dans leurs glissières.

Au surplus, de telles écrans connus ne permettent pas de réaliser un feu étanche lorsque l'écran se place dans une paroi extérieure du socle (cas par exemple de la figure 1). Il est alors nécessaire soit de conserver le long de l'écran, au-dessus de celui-ci, une cloison issue du socle et doublant l'écran, soit d'utiliser un mastic d'étanchéité ou analogue au niveau des glissières, cette solution étant toutefois limitée à un écran non ajouré.

Mais dans le premier cas, le feu est alors plus coûteux (consommation de matière accrue) et plus lourd. Et dans le second cas, le montage de l'écran est rendu encore plus fastidieux.

La présente invention vise à pallier ces inconvénients de l'état de la technique et à proposer en premier lieu un procédé de fabrication d'un socle de feu de signalisation comportant un écran thermique, dans lequel une liaison étanche entre l'écran et le socle du feu puisse être assurée plus facilement.

Un autre objet de la présente invention est de proposer un tel procédé, dans lequel l'étape de montage manuel de l'écran soit supprimée.

Ainsi la présente invention concerne un procédé de fabrication d'un socle en matière plastique d'un feu de signalisation de véhicule automobile, le socle comportant un écran thermique métallique monté sur une ouverture formée dans le socle, procédé caractérisé en ce qu'il consiste à prévoir une mise en contact de l'écran et de la matière du socle avec échauffement de ladite matière.

Dans un premier mode de réalisation, l'écran comporte des rebords engagés dans des rainures formées autour de l'ouverture du socle, et le socle dans cette région est échauffé par exemple par application d'ultrasons.

Dans un deuxième mode de réalisation, l'écran est préalablement chauffé et apposé sur l'ouverture, pour ainsi échauffer la matière du socle au niveau du contact avec l'écran.

Dans un troisième mode de réalisation, le socle est surmoulé sur l'écran, ce dernier étant positionné et maintenu dans le moule de fabrication du socle.

L'invention propose également un feu de signalisation pour véhicule automobile, comportant un écran thermique métallique monté sur une ouverture formée dans un socle en matière plastique dudit feu, caractérisé en ce que l'écran comporte un rebord périphérique continu scellé à chaud dans une rainure continue formée autour de l'ouverture.

Enfin l'invention propose un feu de signalisation pour véhicule automobile, comportant un écran thermique métallique monté sur une ouverture formée dans un socle en matière plastique dudit feu, caractérisé en ce que l'écran comporte un décrochement périphérique noyé dans la matière du socle autour de ladite ouverture.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :
la figure 1 est une vue en coupe verticale axiale d'un bloc de feux de signalisation équipé d'un écran thermique selon une première technique connue,
la figure 2 est une vue en coupe verticale d'un bloc de feux de signalisation équipé d'un écran thermique selon une seconde technique connue,
la figure 3 est une vue en perspective éclatée d'un socle et d'un écran assemblés de façon étanche selon un premier mode de réalisation du procédé selon l'invention,
les figures 4a sont deux vues partielles en coupe transversale illustrant le montage de l'écran sur le socle,
la figure 5 est une vue en perspective d'un socle et d'un écran assemblés de façon étanche selon un autre mode de réalisation de l'invention, et
la figure 6 est une vue partielle en coupe selon la ligne VI-VI de la figure 5.

On notera préliminairement que, d'une figure à l'autre, des éléments ou parties identiques ou similaires sont désignés dans la mesure du possible par les mêmes signes de référence.

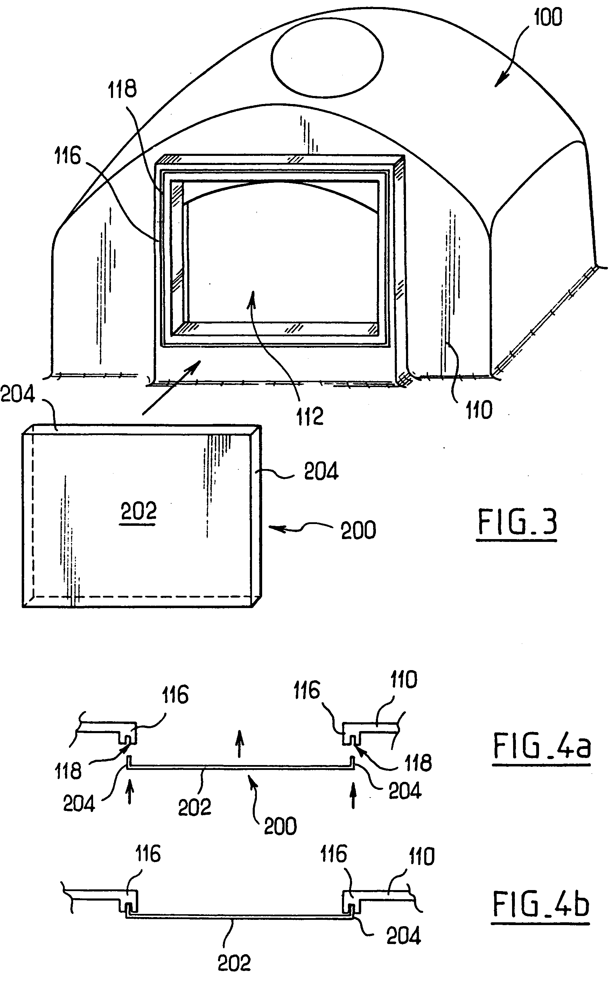

En référence tout d'abord aux figures 3, 4a et 4b, on a représenté un socle 100 d'un feu ou d'un bloc de feux de signalisation dans une paroi 110 duquel est formée une ouverture 112 sur laquelle doit venir se fixer un écran thermique réalisé en métal, notamment en tôle d'acier ou en alliage d'aluminium. L'ouverture 112 est entourée par une nervure 116 en surépaisseur.

L'ouverture 112 formée dans le socle est obtenue, au cours du moulage dudit socle, par exemple à l'aide d'une came prévue dans le moule.

L'écran est désigné par la référence 200. Il comprend une partie plane 202 de forme généralement rectangulaire qui comporte sur toute sa périphérie un rebord à 90° 204.

Ce rebord 204 est destiné à être reçu sur le nervure 116, suivant le mouvement indiqué sur la figure 4a.

On réalise alors à la région du socle correspondant à la nervure 116 l'application d'ultrasons, à l'aide d'un appareil classique en soi de soudure de matière plastique aux ultrasons, pour déformer la matière plastique au niveau de ladite nervure 116, celle-ci se déformant pour épouser étroitement le rebord 204 du socle et ainsi réaliser une étanchéité.

Cette technique de pose d'un écran thermique permet donc de réaliser un feu étanche sans avoir à doubler l'écran par une paroi venue du socle.

Selon une variante de réalisation, l'étanchéité peut être assurée en chauffant l'écran 200 préalablement à son application sur l'ouverture 112. Le rebord 204 de l'écran , en pénétrant dans sa nervure 116, assure alors une déformation de la matière plastique du socle, pour assurer là encore l'étanchéité du montage.

La mise en place de l'écran 200 peut être facilitée par une gorge 118 (figure 4a).

Le profil de la gorge 118 est choisi de manière à obtenir la meilleure étanchéité possible. il peut être par exemple légèrement évasé vers l'extérieur, avec une largeur qui est dans la région du fond de la gorge légèrement inférieure à l'épaisseur du rebord 204 de l'écran.

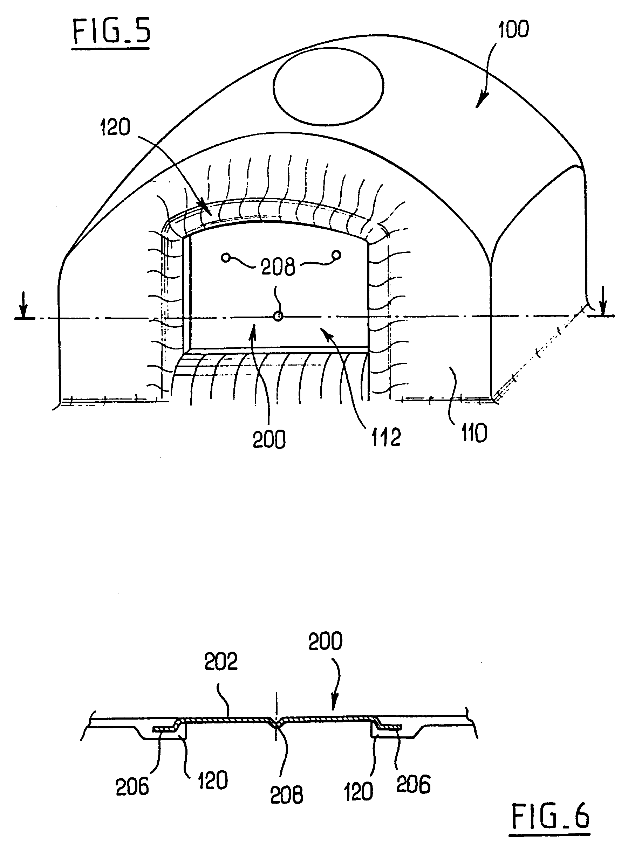

Maintenant en référence aux figures 5 et 6, on a représenté un écran 200 qui est destiné à être disposé dans le moule de fabrication du socle, qui est surmoulé. A cet effet, l'écran 200 présente une zone en décrochement 206, s'étendant sur tout ou partie de sa périphérie, cette zone 206 étant emprisonnée dans une surépaisseur 120 de la paroi 110 du socle entourant l'ouverture 112. Ici encore, pour les parties du socle qui ne se démoulent pas, on a recours à des cames. En particulier, l'une de ces cames assurera le maintien de l'écran pendant l'injection.

La partie plane 202 de l'écran peut être lisse ou comporter des aménagements destinés à faciliter son positionnement et son maintien dans le moule du socle. Sur la figure 5, on a représenté trois ergots 208 formés dans la partie 202 en des emplacements bien déterminés. Ces ergots vont permettre d'une part d'assurer un détrompage lors de la mise en place de l'écran 200 dans le moule du socle, et d'autre part d'empêcher un glissement de l'écran dans le moule sous l'effet de la pression d'injection.

Cette technique de surmoulage est particulièrement adaptée à la réalisation d'écrans thermiques formant en même temps cloisons optiques (voir figure 2).

Bien entendu, la présente invention n'est nullement limitée aux formes de réalisation décrites et représentées, mais l'homme de l'art saura y apporter toute variante ou modification en accord avec l'invention telle que définie dans les revendications.

## Revendications

1. Procédé de fabrication d'un socle (100) en matière plastique d'un feu de signalisation de véhicule automobile, le socle comportant un écran thermique métallique (200) monté sur une ouverture (112) formée dans ledit socle, procédé caractérisé en ce qu'il consiste à prévoir une mise en contact de l'écran et de la matière du socle avec échauffement de ladite matière.

2. Procédé selon la revendication 1, caractérisé en ce que l'écran comporte un rebord périphérique (204) engagé dans une nervure (116) formée autour de l'ouverture (112) du socle, et en ce que l'on expose cette région à un moyen de chauffage.

3. Procédé selon la revendication 2, caractérisé en ce que le moyen de chauffage comprend un appareil à ultrasons.

4. Procédé selon la revendication 2, caractérisé en ce que le moyen de chauffage est constitué par l'écran lui-même, le procédé comportant une étape préalable de chauffage de l'écran.

5. Procédé selon la revendication 1, caractérisé en ce que le socle (100) est surmoulé sur l'écran (200), ce dernier étant positionné et maintenu dans un moule de fabrication du socle.

6. Procédé selon la revendication 5, caractérisé en ce que le socle comporte une partie périphérique en décrochement (206), le surmoulage étant effectué en formant autour de l'ouverture du socle une surépaisseur (120) dans laquelle le décrochement est noyé.

7. Feu de signalisation pour véhicule automobile, comportant un écran thermique métallique (200) monté sur une ouverture (112) formée dans un socle en matière plastique (100) dudit feu, caractérisé en ce que l'écran comporte un rebord périphérique continu (204) scellé à chaud dans une nervure continue (116) formée autour de l'ouverture.

8. Feu de signalisation pour véhicule automobile, comportant un écran thermique métallique (200) monté sur une ouverture (112) formée dans un socle (100) en matière plastique dudit feu, caractérisé en ce que l'écran comporte un décrochement périphérique (206) noyé dans la matière du socle autour de ladite ouverture.

## Claims

1. Method of manufacturing a base (100), made from plastic material, for a motor vehicle indicator light, the base having a metallic heat screen (200) mounted on an opening (112) formed in the said base, a method characterised in that it consists of providing for the screen and the material of the base to be brought into contact, with heating of the said material.

2. Method according to Claim 1, characterised in that the screen has a peripheral edge (204) engaged in a rib (116) formed around the opening (112) in the base, and in that this area is exposed to a heating means.

3. Method according to Claim 2, characterised in that the heating means comprises an ultrasound appliance.

4. Method according to Claim 2, characterised in that the heating means consists of the screen itself, the method including a prior step of heating the screen.

5. Method according to Claim 1, characterised in that the base (100) is moulded onto the screen (200), the latter being positioned and held in a mould for manufacturing the base.

6. Method according to Claim 5, characterised in that the base has an offset peripheral part (206), the moulding-on being effected by forming, around the opening in the base, a thicker part (120) in which the offset is embedded.

7. Indicator light for a motor vehicle, having a metallic heat screen (200) mounted on an opening (112) formed in a plastic base (100) of the said light, characterised in that the screen has a continuous peripheral edge (204) hot-sealed in a continuous rib (116) formed around the opening.

8. Indicator light for a motor vehicle, having a metallic heat screen (200) mounted on an opening (112) formed in a plastic base (100) of the said light, characterised in that the screen has a peripheral offset (206) embedded in the material of the base around the said opening.

## Patentansprüche

1. Verfahren zur Herstellung einer Kunststoffassung (100) einer Kraftfahrzeugsignalleuchte, wobei die Fassung eine Wärmeschutzscheibe aus Metall (200) umfaßt, die auf einer in der Fassung ausgebildeten Öffnung (112) angebracht wird , **dadurch gekennzeichnet,** daß es darin besteht, eine Zusammenfügung der Schutzscheibe und des Werkstoffs der Fassung mit Erwärmung des besagten Werkstoffs vorzusehen.

2. Verfahren nach Anspruch 1 , **dadurch gekennzeichnet,** daß die Schutzscheibe eine Umfangsrandleiste (204) umfaßt, die in eine Rippe (116) eingesetzt wird, die um die Öffnung (112) der Fassung herum ausgebildet ist, und daß dieser Bereich einem Heizmittel ausgesetzt wird.

3. Verfahren nach Anspruch 2 , **dadurch gekennzeichnet,** daß das Heizmittel ein Ultraschallgerät umfaßt.

4. Verfahren nach Anspruch 2 , **dadurch gekennzeichnet,** daß das Heizmittel aus der Schutzscheibe selbst besteht, wobei das Verfahren einen vorherigen Arbeitsgang zur Erhitzung der Schutzscheibe umfaßt.

5. Verfahren nach Anspruch 1 , **dadurch gekennzeichnet,** daß die Fassung (100) auf der Schutzscheibe (200) aufgeformt wird, wobei diese im Formwerkzeug zur Herstellung der Fassung positioniert und gehalten wird.

6. Verfahren nach Anspruch 5 , **dadurch gekennzeichnet,** daß die Fassung einen abgesetzten Umfangsteil (206) umfaßt, wobei die Aufformung erfolgt, indem um die Öffnung der Fassung herum eine Erhöhung (120) ausgebildet wird, in die der Absatz eingelassen wird.

7. Signalleuchte für Kraftfahzeuge, umfassend eine Wärmeschutzscheibe aus Metall (200), die auf einer Öffnung (112) angebracht wird, die in einer Kunststoffassung (100) der besagten Leuchte ausgebildet ist, **dadurch gekennzeichnet,** daß die Schutzscheibe eine durchgehende Umfangsrandleiste (204) umfaßt, die in einer um die Öffnung herum ausgebildeten durchgehenden Rippe (116) verschweißt ist.

8. Signalleuchte für Kraftfahrzeuge, umfassend eine Wärmeschutzscheibe aus Metall (200), die auf einer Öffnung (112) angebracht wird, die in eine Kunststoffassung (100) der besagten Leuchte ausgebildet ist, **dadurch gekennzeichnet,** daß die Schutzscheibe einen Umfangsabsatz (206) aufweist, der in den Werkstoff der Fassung um die besagte Öffnung herum eingelassen ist.
